# EUROPEAN PATENT APPLICATION

(11) **EP 4 694 071 A1**
(43) Date of publication of application: **11.02.2026**
(21) Application number: 24777749.3
(22) Date of filing: 14.03.2024
(51) Int. Cl.: H04L 45/00

(54) **PATH LEGITIMACY VERIFICATION METHOD AND APPARATUS, AND REDIRECTED PATH ACQUISITION METHOD AND APPARATUS**

(30) Priority: 30.03.2023 CN 202310365652
(71) Applicant: Huawei Technologies Co., Ltd., Shenzhen, Guangdong 518129 (CN)
(72) Inventor: LIU, Mingxing, Shenzhen, Guangdong 518129 (CN); HUANG, Mingqing, Shenzhen, Guangdong 518129 (CN); GENG, Nan, Shenzhen, Guangdong 518129 (CN); CHEN, Shuanglong, Shenzhen, Guangdong 518129 (CN); TAN, Zhen, Shenzhen, Guangdong 518129 (CN)
(74) Representative: Pfenning, Meinig & Partner mbB
(86) International application number: PCT/CN2024/081694
(87) International publication number: WO 2024/198959

(57) **Abstract**

This application discloses a path validity verification method, a redirection path obtaining method, and an apparatus. A first network device obtains a first AS path obtained through inter-domain traffic redirection, and verifies validity of the first AS path according to a verification strategy, to obtain a verification result. The verification strategy is used to verify validity of an AS sequence included in the first AS path. To be specific, for an AS path obtained through inter-domain traffic redirection, the first network device may verify validity of an AS sequence included in the AS path, to ensure that the AS path obtained through redirection is a valid path, and ensure normal transport of inter-domain traffic.

## Description

This application claims priority to Chinese Patent Application No. CN202310365652.4, filed with the China National Intellectual Property Administration on March 30, 2023 and entitled "PATH VALIDITY VERIFICATION METHOD, REDIRECTION PATH OBTAINING METHOD, AND APPARATUS", which is incorporated herein by reference in its entirety.

### TECHNICAL FIELD

This application relates to the field of communication technologies, and in particular, to a path validity verification method, a redirection path obtaining method, and an apparatus.

### BACKGROUND

The border gateway protocol (border gateway protocol, BGP) is a decentralized routing protocol in the internet. A p relationship established between two or more peer entities in a same autonomous system (autonomous system, AS) is referred to as an (internal/interior BGP, iBGP) peer relationship. A peer relationship established between peer entities belonging to different ASs is referred to as an (external/exterior BGP, eBGP) peer relationship.

In BGP, an AS sends a BGP route to notify another AS of a next hop to a destination IP prefix in the BGP route. Each time the BGP route passes through an AS, the AS on the path adds an autonomous system number (autonomous system number, ASN) of the AS to an AS path attribute. A router of the another AS stores the received BGP route in a routing information base (routing information base, RIB).

A network device forwards a received packet based on a forwarding information base (forwarding information base, FIB) exported from the RIB. Generally, traffic redirection is configured for some management purposes, such as a quality of service (quality of service, QoS) requirement and traffic attack defense. In this way, traffic is forwarded according to a customized rule rather than based on the RIB or FIB. A traffic redirection technology is a technology for directly matching a packet for forwarding according to the customized rule on a data plane. Inter-domain traffic redirection is a technology for redirecting traffic destined for another autonomous system, and is generally configured on an autonomous system border router (autonomous system border router, ASBR). However, the inter-domain traffic redirection is transparent to a routing protocol. As a result, the traffic may be forwarded along an unknown AS path, causing an inter-domain traffic black hole, traffic bypass, a traffic loop, and the like.

### SUMMARY

This application provides a path validity verification method, a redirection path obtaining method, and an apparatus, to verify validity of an inter-domain redirection path, and ensure normal traffic transport.

According to a first aspect of this application, a path validity verification method is provided. In the method, a first network device obtains a first AS path obtained through redirection, and verifies validity of the first AS path according to a verification strategy. The verification strategy is used to verify validity of an AS sequence included in the first AS path, for example, verify whether an AS that performs a redirection operation and a next-hop AS corresponding to an AS that performs a redirection operation on the first AS path meet a preset sequence relationship. In other words, for an AS path obtained through inter-domain traffic redirection, the first network device may verify validity of an AS sequence included in the AS path, to ensure that the AS path obtained through redirection is a valid path, and ensure normal transport of inter-domain traffic.

The first network device may obtain, in the following manners, the first AS path obtained through redirection.

In a first manner, the first network device receives an advertisement packet sent by a second network device on the first AS path. The advertisement packet includes the first AS path. In this implementation, the second network device having a redirection function can perform a redirection operation to obtain the first AS path obtained through redirection, and notify, by sending the advertisement packet, another network device of the first AS path obtained through redirection. The first network device obtains the first AS path based on the advertisement packet.

In a second manner, the first network device obtains the first AS path based on a routing entry and a redirection strategy. The redirection strategy includes a parameter set. The routing entry includes the first AS path and the parameter set. In this implementation, the first network device has a redirection function, and can obtain the first AS path based on the routing entry of the first network device and the configured redirection strategy. Specifically, it is determined whether the parameter set in the redirection strategy matches the parameter set in the routing entry. If the parameter set in the redirection strategy matches the parameter set in the routing entry, an AS path corresponding to the parameter set in the routing entry is determined as the first AS path.

The parameter set may include at least one of a destination prefix or next-hop information. To be specific, the first network device determines whether a destination prefix in the redirection strategy matches a destination prefix in the routing entry, and/or determines whether next-hop information in the redirection strategy matches next-hop information in the routing entry. In addition, in some scenarios, the redirection strategy may be used to redirect inter-domain traffic from some source prefixes. In view of this, the parameter set may further include a source prefix, so that the first network device performs a redirection operation when a source prefix in the redirection strategy matches a source prefix in the routing entry.

After obtaining the first AS path based on the routing entry and the redirection strategy, the first network device may send an advertisement packet to the source AS, so that the source AS perceives the first AS path obtained through redirection. The advertisement packet includes the first AS path.

To make the source AS obtain more redirection related information, the advertisement packet may further include a number of the AS that performs the redirection operation and the used redirection strategy. To ensure correct transport of the advertisement packet, an AS path through which the advertisement packet is transported may be further included. The AS path includes a number of each AS that is traversed.

The first network device verifies the validity of the first AS path according to the verification strategy in the following manners.

In a first manner, if a next-hop AS corresponding to the first network device on the first AS path is a customer AS of an AS to which the first network device belongs, and a destination prefix matched for redirection is not a prefix advertised by a peer AS or an operator AS corresponding to the AS to which the first network device belongs, the first network device determines that the first AS path is a valid path.

If the next-hop AS corresponding to the first network device on the first AS path is the peer AS of the AS to which the first network device belongs, and the destination prefix matched for redirection is not the prefix advertised by the peer AS or the operator AS corresponding to the AS to which the first network device belongs, the first network device determines that the first AS path is a valid path.

In a second manner, if a next-hop AS corresponding to the first network device on the first AS path is a neighbor AS corresponding to an AS to which the first network device belongs, the first network device determines that the first AS path is a valid path. The neighbor AS is a next hop of the AS to which the first network device belongs in a direction from the source AS to the AS to which the first network device belongs.

In a third manner, if a next-hop AS corresponding to the first network device on the first AS path is a preset AS, the first network device determines that the first AS path is a valid path.

According to a second aspect of this application, a redirection path obtaining method is provided. The method includes: A first network device obtains a routing entry and a redirection strategy; and the first network device obtains, based on the routing entry and the redirection strategy, a first AS path obtained through redirection. The redirection strategy includes a parameter set. The routing entry includes the parameter set and the first AS path.

For a specific implementation in which the first network device obtains, based on the routing entry and the redirection strategy, the first AS path obtained through redirection, refer to related descriptions in the first aspect.

In a possible implementation, the parameter set includes at least one of a destination prefix or next-hop information.

In a possible implementation, the method further includes: The first network device sends an advertisement packet to a source AS. The advertisement packet includes the first AS path.

According to a third aspect of this application, a redirection path obtaining method is provided. The method includes: A first network device receives an advertisement packet sent by a second network device, where the advertisement packet includes a first AS path obtained through redirection; and the first network device obtains the first AS path based on the advertisement packet.

In a possible implementation, the advertisement packet further includes a number of an AS that performs a redirection operation, an AS path through which the advertisement packet is transported, and a redirection strategy used for redirection.

According to a fourth aspect of this application, a path validity verification apparatus is provided. The apparatus is used in a first network device. The apparatus includes: an obtaining unit, configured to obtain a first autonomous system AS path obtained through redirection; and a processing unit, configured to verify validity of the first AS path according to a verification strategy, where the verification strategy is used to verify validity of an AS sequence included in the first AS path.

In a possible implementation, the obtaining unit is specifically configured to receive an advertisement packet sent by a second network device on the first AS path, where the advertisement packet includes the first AS path.

In a possible implementation, the obtaining unit is specifically configured to obtain the first AS path based on a routing entry and a redirection strategy, where the redirection strategy includes a parameter set, and the routing entry includes the first AS path and the parameter set.

In a possible implementation, the parameter set includes at least one of a destination prefix or next-hop information.

In a possible implementation, the parameter set further includes a source prefix.

In a possible implementation, the apparatus further includes: a sending unit, used by the first network device to send an advertisement packet to a source AS, where the advertisement packet includes the first AS path.

In a possible implementation, the advertisement packet further includes a number of an AS that performs a redirection operation, an AS path through which the advertisement packet is transported, and the redirection strategy.

In a possible implementation, the processing unit is specifically configured to: if a next-hop AS corresponding to the first network device on the first AS path is a customer AS of an AS to which the first network device belongs, and a destination prefix matched for redirection is not a prefix advertised by a peer AS or an operator AS corresponding to the AS to which the first network device belongs, determine that the first AS path is a valid path; or if the next-hop AS corresponding to the first network device on the first AS path is the peer AS of the AS to which the first network device belongs, and the destination prefix matched for redirection is not the prefix advertised by the peer AS or the operator AS corresponding to the AS to which the first network device belongs, determine that the first AS path is a valid path.

In a possible implementation, the processing unit is specifically configured to: if a next-hop AS corresponding to the first network device on the first AS path is a neighbor AS corresponding to an AS to which the first network device belongs, determine that the first AS path is a valid path, where the neighbor AS is a next hop of the AS to which the first network device belongs in a direction from the source AS to the AS to which the first network device belongs.

In a possible implementation, the processing unit is specifically configured to: if a next-hop AS corresponding to the first network device on the first AS path is a preset AS, determine that the first AS path is a valid path.

According to a fifth aspect of this application, a redirection path obtaining apparatus is provided. The apparatus is used in a first network device. The apparatus includes: an obtaining unit, configured to obtain a routing entry and a redirection strategy; and a processing unit, configured to obtain, based on the routing entry and the redirection strategy, a first AS path obtained through redirection, where the redirection strategy includes a parameter set, and the routing entry includes the parameter set and the first AS path.

In a possible implementation, the parameter set includes at least one of a destination prefix or next-hop information.

In a possible implementation, the apparatus further includes: a sending unit, configured to send an advertisement packet to a source AS, where the advertisement packet includes the first AS path.

According to a sixth aspect of this application, a redirection path obtaining apparatus is provided. The apparatus is used in a first network device. The apparatus includes: a receiving unit, configured to receive an advertisement packet sent by a second network device, where the advertisement packet includes a first AS path obtained through redirection; and a processing unit, configured to obtain the first AS path based on the advertisement packet.

In a possible implementation, the advertisement packet further includes a number of an AS that performs a redirection operation, an AS path through which the advertisement packet is transported, and a redirection strategy used for redirection.

According to a seventh aspect of this application, a network device is provided. The network device includes a processor and a memory.

The memory is configured to store instructions or a computer program.

The processor is configured to execute the instructions or the computer program in the memory, to enable the network device to perform the method according to any one of the first aspect and the possible designs of the first aspect, or performs the method according to any one of the second aspect and the possible designs of the second aspect, or performs the method according to any one of the third aspect and the possible designs of the third aspect.

According to an eighth aspect of this application, a network system is provided. The system includes a first network device and a second network device. The first network device is configured to perform the method according to any one of the first aspect and the possible designs of the first aspect, or perform the method according to any one of the second aspect and the possible designs of the second aspect, or perform the method according to any one of the third aspect and the possible designs of the third aspect. The second network device is configured to send an advertisement packet to the first network device.

According to a ninth aspect of this application, a computer-readable storage medium is provided, including instructions. When the instructions are run on a computer, the computer is enabled to perform the method according to any one of the first aspect and the possible designs of the first aspect, or perform the method according to any one of the second aspect and the possible designs of the second aspect, or perform the method according to any one of the third aspect and the possible designs of the third aspect.

According to a tenth aspect of this application, a computer program product is provided. The computer program product includes a program. When the program is run on a processor, a computer or a network device is enabled to perform the method according to any one of the first aspect and the possible designs of the first aspect, or perform the method according to any one of the second aspect and the possible designs of the second aspect, or perform the method according to any one of the third aspect and the possible designs of the third aspect.

According to technical solutions provided in this application, a first network device obtains a first AS path obtained through inter-domain traffic redirection, and verifies validity of the first AS path according to a verification strategy, to obtain a verification result. The verification strategy is used to verify validity of an AS sequence included in the first AS path. To be specific, for an AS path obtained through inter-domain traffic redirection, the first network device may verify validity of an AS sequence included in the AS path, to ensure that the AS path obtained through redirection is a valid path, and ensure normal transport of inter-domain traffic.

### BRIEF DESCRIPTION OF DRAWINGS

To describe technical solutions in embodiments of this application or the conventional technology more clearly, the following briefly describes accompanying drawings for describing embodiments or the conventional technology. It is clear that the accompanying drawings in the following descriptions show only some embodiments recorded in this application, and persons of ordinary skill in the art may still derive other accompanying drawings from these accompanying drawings without creative efforts.
FIG. 1a is a diagram of a redirection application scenario according to an embodiment of this application;
FIG. 1b is a diagram of another redirection application scenario according to an embodiment of this application;
FIG. 2 is a flowchart of a path validity verification method according to an embodiment of this application;
FIG. 3 is a flowchart of a redirection path obtaining method according to an embodiment of this application;
FIG. 4 is a diagram of a format of an advertisement packet according to an embodiment of this application;
FIG. 5 is a flowchart of another redirection path obtaining method according to an embodiment of this application;
FIG. 6a is a diagram of sending an advertisement packet according to an embodiment of this application;
FIG. 6b is another diagram of sending an advertisement packet according to an embodiment of this application;
FIG. 7 is a diagram of a structure of a path validity verification apparatus according to an embodiment of this application;
FIG. 8 is a diagram of a structure of a redirection path obtaining apparatus according to an embodiment of this application;
FIG. 9 is a diagram of a structure of another redirection path obtaining apparatus according to an embodiment of this application;
FIG. 10 is a diagram of a structure of a network device according to an embodiment of this application; and
FIG. 11 is a diagram of a structure of another network device according to an embodiment of this application.

### DESCRIPTION OF EMBODIMENTS

To make persons skilled in the art understand solutions in this application better, the following clearly and fully describes technical solutions in embodiments of this application with reference to accompanying drawings in embodiments of this application. It is clear that the described embodiments are merely some rather than all of embodiments of this application.

Inter-domain traffic redirection means redirecting, to a new next-hop AS, traffic destined for another AS. Accordingly, a new AS forwarding path is generated. Generally, the new AS forwarding path is transparent to a BGP, and another AS cannot perceive the new AS forwarding path on a control plane. As a result, inter-domain traffic may be forwarded along an invalid AS path, causing an inter-domain traffic black hole, traffic bypass, a traffic loop, and the like.

In view of this, this application provides a path verification method. After a first AS path for redirecting inter-domain traffic is obtained, validity of an AS sequence included in the AS path is verified according to a verification strategy. In this way, when the AS path obtained through redirection is a valid path, the AS path is used to forward the inter-domain traffic, to ensure normal traffic transport.

The following describes a system architecture in embodiments of this application by using an example.

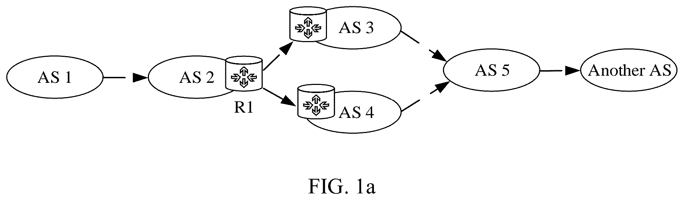

FIG. 1a is a diagram of an architecture of a network system according to this application. The network system shown in FIG. 1a includes an AS 1 to an AS 5, and another AS. The AS 1 is a source AS corresponding to inter-domain traffic. The inter-domain traffic is forwarded from the AS 1 to the another AS. A normal AS path corresponding to the inter-domain traffic is the AS 1->the AS 2->the AS 3->the AS 5->the another AS. In this application scenario, a redirection strategy is configured on an egress border network device R1 of the AS 2, a next hop for the traffic changes from the AS 3 to the AS 4, and a new AS path the AS 1->the AS 2->the AS 4->the AS 5->the another AS is generated.

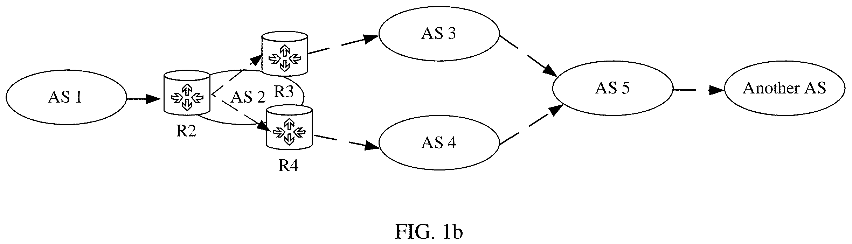

FIG. 1b is a diagram of an architecture of another network system according to this application. The network system shown in FIG. 1b includes an AS 1 to an AS 5, and another AS. The AS 1 is a source AS corresponding to inter-domain traffic. The inter-domain traffic is forwarded from the AS 1 to the another AS. A normal AS path corresponding to the inter-domain traffic is the AS 1->the AS 2->the AS 3->the AS 5->the another AS. In this application scenario, a redirection strategy is configured on an ingress border network device R2 of the AS 2, the traffic reaches a new next-hop AS through a different egress border network device (an original egress border network device R3 is changed to an egress border network device R4), and a new AS path the AS 1->the AS 2->the AS 4->the AS 5->the another AS is generated.

In the application scenarios shown in FIG. 1a and FIG. 1b, when a route reflector (route reflector, RR) performs route preference, the ingress border network device R2 cannot learn a redirection next-hop AS. In this case, the route reflector enables an add-path feature, so that the ingress border network device R2 obtains all BGP routes. The add-path feature is used to advertise a plurality of paths with a same source prefix. Generally, when advertising the BGP route, a network device advertises an optimal path. The add-path feature is enabled, so that the network device advertises the optimal path and a sub-optimal path when advertising the BGP routes.

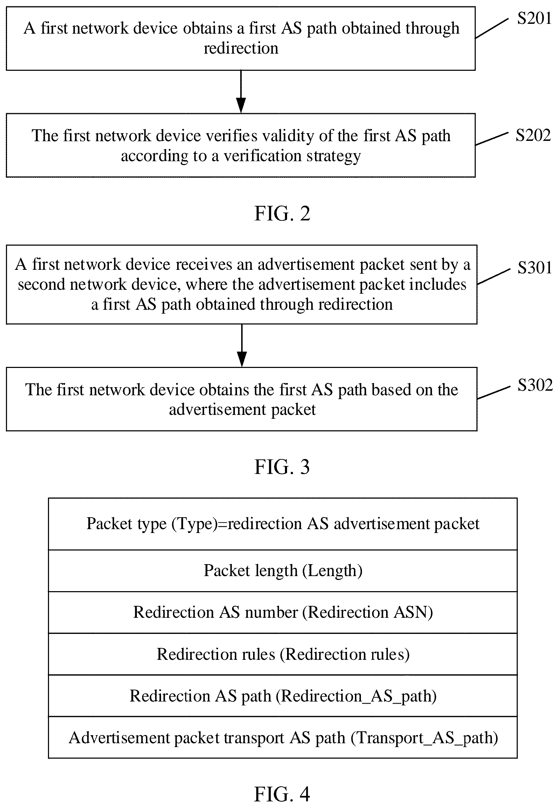

To facilitate understanding of technical solutions provided in embodiments of this application, the following provides descriptions with reference to the application scenario shown in FIG. 1a or FIG. 1b. FIG. 2 is a flowchart of a path validity verification method according to an embodiment of this application. As shown in FIG. 2, the method includes the following steps.

S201: A first network device obtains a first AS path obtained through redirection.

In this embodiment, the first network device may be a network device in a source AS. For example, the first network device may be a network device in the AS 1 shown in FIG. 1a or

FIG. 1b. The first network device may alternatively be a network device in an AS that performs a redirection operation. For example, the first network device may be R1 in FIG. 1a or R2 in FIG. 1b. Specifically, the first network device may be a controller, a route reflector, a server, or a border network device. The border network device may be a border router ASBR.

The first network device may obtain the first AS path in the following manner. In one manner, the first network device receives an advertisement packet sent by a second network device on the first AS path. The advertisement packet includes the first AS path. To be specific, the first network device may obtain the first AS path by receiving the advertisement packet sent by the second network device that performs the redirection operation. For example, the first network device is a network device in the AS 1 in FIG. 1a, and the second network device is R1 in the AS 2. After obtaining, according to a redirection strategy, an AS path obtained through redirection, R1 may generate the advertisement packet, and send the advertisement packet to the first network device. In another manner, the first network device obtains the first AS path based on a routing entry and a redirection strategy. The redirection strategy includes a parameter set. The routing entry includes the first AS path and the parameter set. The parameter set includes at least one of a destination prefix or next-hop information. To be specific, when the first network device is configured with the redirection strategy, the first network device may obtain the first AS path based on the routing entry of the first network device and the redirection strategy. For example, the first network device is R1 in FIG. 1a, and is pre-configured with the redirection strategy. The first network device obtains, based on the routing entry and the redirection strategy, the AS path obtained through redirection.

S202: The first network device verifies validity of the first AS path according to a verification strategy.

In this embodiment, after obtaining the first AS path obtained through redirection, the first network device verifies the validity of the first AS path according to the verification strategy. The verification strategy is used to verify validity of an AS sequence included in the first AS path. In other words, the first network device verifies, according to the verification strategy, whether the AS sequence included in the first AS path meets a preset condition. If the AS sequence meets the preset condition, it indicates that the included AS sequence is valid, and therefore the first AS path is a valid path. If the AS sequence does not meet the preset condition, the first AS path is an invalid path, and cannot be used to transport inter-domain traffic.

The first network device may collect a condition used to verify the validity of the AS sequence, and generate the verification strategy; or receive the verification strategy delivered by a device like a controller. The verification strategy may be used to verify validity of the AS sequence included in the first AS path from a plurality of aspects, for example, whether the AS sequence included in the first AS path meets a rule indicated by a first database, whether the AS sequence included in the first AS path meets a rule indicated by a second database, and whether the AS sequence included in the first AS path includes a preset AS. The first database and the second database are different databases. For example, the first database indicates a valley-free (valley-free) principle between ASs, and the second database indicates a topology relationship between the ASs.

In the valley-free principle, three AS roles that are respectively an operator AS, a customer AS, and a peer AS are defined. The operator AS provides an internet traversal service for the customer AS, that is, allows a customer to reach another network through the operator AS. Two autonomous systems, namely one peer AS and another peer AS, and customers of the two autonomous systems are reachable to each other, and traffic generated between the peer ASs is shared by the two ASs. The two peer ASs may be two operator ASs or two customer ASs. When a route is selected, the following rules are generally followed: A route from the customer AS is allowed to be transported to a customer AS, the peer AS, and the operator AS; a route advertised by the peer AS is allowed to be transported to the customer AS, but is unallowed to be advertised to another peer AS or the operator AS; and a route advertised by the operator AS is allowed to be transported to the customer AS, but is unallowed to be advertised to the another peer AS or the operator AS.

In view of this, in the following cases, the first network device verifies, according to the verification strategy, the validity of the AS sequence included in the first AS path.

In a first case, if a next-hop AS corresponding to the first network device on the first AS path is a customer AS of an AS to which the first network device belongs, and a destination prefix matched for redirection is not a prefix advertised by a peer AS or an operator AS corresponding to the AS to which the first network device belongs, the first network device determines that the first AS path is a valid path. The first network device is a network device that performs a redirection operation. The AS to which the first network device belongs is an AS that performs redirection. To be specific, when a next-hop AS corresponding to the AS to which the first network device belongs in the AS sequence included in the first AS path is the customer AS of the AS to which the first network device belongs, and the destination prefix matched by the first network device for the redirection according to the redirection strategy is not the prefix advertised by the peer AS or the operator AS corresponding to the AS to which the first network device belongs, it is determined that the AS sequence included in the first AS path is valid, and the first AS path is a valid path. For example, in the application scenario shown in FIG. 1a, if the first network device is R1, the AS to which the first network device belongs is the AS 2, and the destination prefix is a prefix P5 corresponding to the AS 5, the first AS path is the AS 2->the AS 4->the AS 5. In this case, the next-hop AS corresponding to the first network device is the AS 4. If the AS 4 is a customer AS of the AS 2, and the destination prefix P5 matched for redirection is not a prefix advertised by a peer AS or an operator AS corresponding to the AS 2 (that is, the AS 5 is not a peer AS or an operator AS corresponding to the AS 2), the first network device determines that the first AS path is a valid path.

In a second case, if the next-hop AS corresponding to the first network device on the first AS path is the peer AS of the AS to which the first network device belongs, and the destination prefix matched for redirection is not the prefix advertised by the peer AS or the operator AS corresponding to the AS to which the first network device belongs, the first network device determines that the first AS path is a valid path. The first network device is the network device that performs the redirection operation. The AS to which the first network device belongs is the AS that performs redirection. To be specific, when the next-hop AS corresponding to the AS to which the first network device belongs in the AS sequence included in the first AS path is the peer AS of the AS to which the first network device belongs, and the destination prefix matched by the first network device for redirection according to the redirection strategy is not the prefix advertised by the peer AS or the operator AS corresponding to the AS to which the first network device belongs, it is determined that the AS sequence included in the first AS path is valid, and the first AS path is a valid path. For example, in the application scenario shown in FIG. 1a, if the first network device is R1, the AS to which the first network device belongs is the AS 2, and the destination prefix is the prefix P5 corresponding to the AS 5, the first AS path is the AS 4->the AS 5. In this case, the next-hop AS corresponding to the first network device is the AS 4. If the AS 4 is a peer AS of the AS 2, and the destination prefix P5 matched for redirection is not the prefix advertised by the peer AS or the operator AS corresponding to the AS 2 (that is, the AS 5 is not the peer AS or the operator AS corresponding to the AS 2), the first network device determines that the first AS path is a valid path. The destination prefix matched for redirection needs to be included in a route advertised by the next-hop AS. In addition, in some application scenarios, the peer AS and the operator AS that correspond to the AS to which the first network device belongs may advertise a same route. In this case, the first AS path obtained by the AS to which the first network device belongs by performing redirection between the peer AS and the operator AS is a valid path. However, this operation violates a principle of profit maximization for the AS. Therefore, during redirection, the traffic is forwarded to the peer AS or the customer AS as much as possible.

In a third case, if a next-hop AS corresponding to the first network device on the first AS path is a neighbor AS corresponding to an AS to which the first network device belongs, the first network device determines that the first AS path is a valid path. The neighbor AS is a next hop of the AS to which the first network device belongs in a direction from the source AS to the AS to which the first network device belongs. In this embodiment, the AS to which the first network device belongs may be any AS in the AS sequence included in the first AS path, and the first network device is a network device included in any AS. In other words, validity of any AS included in the first AS path is verified. If a next-hop AS corresponding to the first network device in any AS in the AS sequence is the neighbor AS corresponding to the AS to which the first network device belongs, it is determined that the first AS path is a valid path.

In a fourth case, if a next-hop AS corresponding to the first network device on the first AS path is a preset AS, the first network device determines that the first AS path is a valid path. In this embodiment, the AS to which the first network device belongs may be any AS in the AS sequence included in the first AS path, and the first network device is a network device included in any AS. During specific implementation, a specified AS may be pre-configured on the first network device. If the first AS path includes the pre-specified AS, it is determined that the first AS path is a valid path.

In addition, to avoid a traffic loop, the first AS path should comply with a loop prevention mechanism, to be specific, the first AS path cannot pass through a redirection AS or an upstream AS. The upstream AS is an AS that is traversed in a direction from the source AS to the redirection AS. The first network device may verify the validity of the first AS path in all the foregoing manners, or verify the validity of the first AS path in any combination manner. This is not determined in this embodiment.

It can be learned that the first network device obtains the first AS path obtained through inter-domain traffic redirection, and verifies the validity of the first AS path according to the verification strategy, to obtain a verification result. The verification strategy is used to verify the validity of the AS sequence included in the first AS path. To be specific, for an AS path obtained through inter-domain traffic redirection, the first network device may verify validity of an AS sequence included in the AS path, to ensure that the AS path obtained through redirection is a valid path, and ensure normal transport of the inter-domain traffic.

The foregoing embodiment mentions two manners in which the first network device obtains the first AS path. The following provides detailed descriptions with reference to accompanying drawings.

For the first obtaining manner, refer to a redirection path obtaining method provided in an embodiment corresponding to FIG. 3. FIG. 3 is a flowchart of a redirection path obtaining method according to an embodiment of this application. As shown in FIG. 3, the method includes the following steps.

S301: A first network device receives an advertisement packet sent by a second network device on a first AS path, where the advertisement packet includes the first AS path.

S302: The first network device obtains the first AS path based on the advertisement packet.

In this embodiment, if no redirection strategy is configured on the first network device, the first network device may obtain, by receiving the advertisement packet sent by the second network device having a redirection function, the first AS path obtained through redirection. Specifically, after receiving the advertisement packet, the first network device parse the advertisement packet to obtain the first AS path. The advertisement packet may be a BGP packet, a BGP monitoring protocol (BGP monitoring protocol, BMP) packet, or an intermediate system to intermediate system (Intermediate system to intermediate system, IS-IS) packet. The advertisement packet may carry the first AS path using a type length value (type length value, TLV). A specific representation form of the advertisement packet may be selected based on an actual application case, which is not limited in this embodiment.

To make the first network device obtain more information about the first AS path, the advertisement packet may not only carry the first AS path, but also carry information such as a number of an AS that performs a redirection operation, an AS path through which the advertisement packet is transported, and a redirection strategy. The number of the AS that performs the redirection operation is a number of an AS that performs the redirection operation and to which the second network device belongs. For example, in FIG. 1a, R1 performs the redirection operation, and R1 belongs to the AS 2. In this case, the advertisement packet carries the AS 2. The AS path through which the advertisement packet is transported is a sequence of ASs that are traversed from the AS that performs the redirection operation to the source AS. For example, in FIG. 1a, the AS 2 performs the redirection operation, and the source AS is the AS 1. In this case, the AS path may include [AS 1].

As shown in FIG. 4, a format of the advertisement packet includes a packet type (Type) field, a length (Length) field, a redirection AS number (Redirection ASN) field, a redirection rules (Redirection rules) field, a redirection AS path (Redirection_AS_path) field, and a transport AS path (Transport_AS_path) field. The packet type (Type) field indicates a type of the packet. For example, the packet type field indicates that the packet is a packet used to notify an AS path obtained through redirection. The redirection AS number field includes the number of the AS that performs the redirection operation, for example, includes the AS 2 in FIG. 1a. The redirection rules field includes a redirection strategy used to perform the redirection operation. The redirection AS path field includes the AS path obtained through redirection. For example, in FIG. 1a, the field includes [AS 2->AS 4->AS 5->another AS]. After the AS path obtained through redirection is determined, the AS path obtained through redirection is notified to the another AS. In this case, the transport AS path field includes the sequence of the ASs that are traversed from the AS that performs the redirection operation to the source AS.

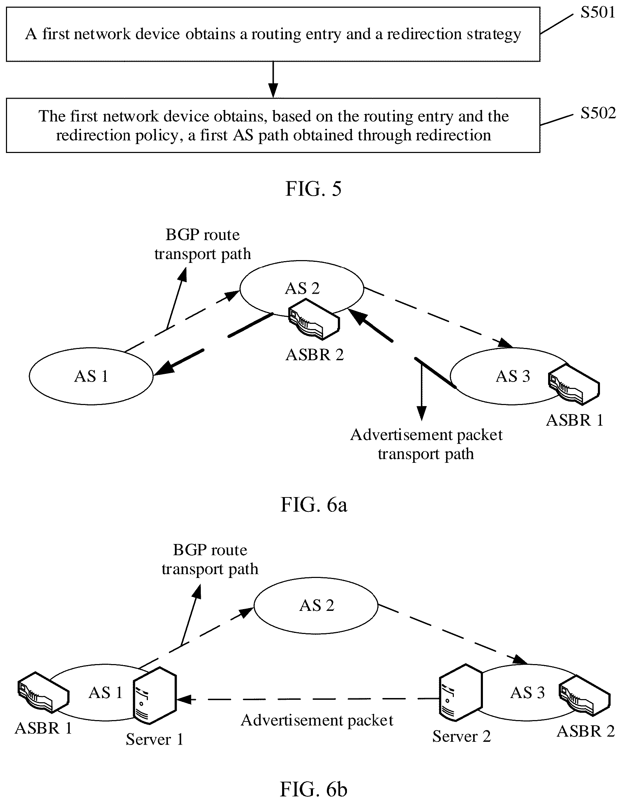

For the second obtaining manner, refer to a redirection path obtaining method provided in an embodiment corresponding to FIG. 5. FIG. 5 is a flowchart of another redirection path obtaining method according to an embodiment of this application. As shown in FIG. 5, the method includes the following steps.

S501: A first network device obtains a routing entry and a redirection strategy.

S502: The first network device obtains a first AS path based on the routing entry and the redirection strategy.

In this embodiment, when the first network device is configured with the redirection strategy, the first network device may determine the first AS path based on the routing entry and the redirection strategy. The redirection strategy includes a parameter set. The routing entry includes the first AS path and the parameter set.

The routing entry may be generated by the first network device when the first network device receives a BGP route sent by another AS. The routing entry may include three parts that are respectively an input routing table like Adj-RIBs-In, a local routing table like Loc-RIB, and an output routing table like Adj-RIBs-Out. Adj-RIBs-In is used to store routing information learned by the first network device from a BGP peer, namely, an initial route. Loc-RIB is used to store a route selected from Adj-RIBs-In through a route decision, namely, an optimal route. Adj-RIBs-Out is used to store routing information that the first network device needs to send to the peer, namely, a to-be-advertised route. The redirection strategy may be manually configured on the first network device or obtained from a controller side. Specifically, the first network device may send a request message to a controller, to obtain the redirection strategy using the request message, or the controller may actively deliver the redirection strategy to the first network device. The parameter set may include information such as a destination prefix, next-hop information, and a source prefix. The next-hop information may be an identifier of an egress interface to a next-hop network device or an IP address of the next-hop network device.

In this embodiment, when obtaining the first AS path based on the routing entry and the redirection strategy, the first network device compares whether the parameter set included in the routing entry matches the parameter set included in the redirection strategy, and uses, as an AS path obtained through redirection, the first AS path in the routing entry if the parameter set included in the routing entry matches the parameter set included in the redirection strategy.

In a possible implementation, the parameter set includes the destination prefix. If a destination prefix in the routing entry matches a destination prefix in the redirection strategy, the first network device uses, as the AS path obtained through redirection, the first AS path corresponding to the destination prefix in the routing entry. In a possible implementation, the parameter set includes the next-hop information. If next-hop information in the routing entry matches next-hop information in the redirection strategy, the first network device uses, as the AS path obtained through redirection, the first AS path corresponding to the next-hop information in the routing entry.

Specifically, in addition to the parameter set, the redirection strategy may further include a next-hop AS corresponding to the parameter set. When the first network device determines that the parameter set included in the routing entry matches the parameter set included in the redirection strategy, the first network device obtains the next-hop AS corresponding to the parameter set in the redirection strategy, and obtains the first AS path based on the next-hop AS and an AS path included in the routing entry. For example, in the application scenario shown in FIG. 1a, a redirection strategy shown in the following table is configured on R1, where SrcIP indicates a source prefix, DstIP indicates a destination prefix, and Port indicates an egress interface identifier. AS 1 to AS 5 respectively correspond to prefixes P1 to P5.

**Table 1 Redirection strategy**

| Sequence number | Matching field | Next-hop AS |
|---|---|---|
| 1 | SrcIP=P1 & DstIP=P5 | AS 4 |
| 2 | DstIP=P4 | AS 4 |
| 3 | Port=80 | AS 4 |

A redirection strategy 1 includes both the source prefix and the destination prefix. In this case, for a route in the routing entry, if a source prefix is P1 and a destination prefix is P5, it indicates that the redirection strategy affects traffic from the AS 1, and the traffic is redirected to a new next-hop AS, namely, the AS 4. R1 determines, using the Adj-RIBs-in table, the destination prefix P5, and the next-hop AS 4 in the routing entry, that an AS path obtained through redirection and corresponding to the inter-domain traffic from the AS 1 is the AS 2->the AS 4->the AS 5.

A redirection strategy 2 includes only the destination prefix, and does not specify a matched source prefix. In this case, it indicates that the redirection strategy matches all source prefixes, to be specific, affects traffic from each AS. If a destination prefix of a route in the routing entry is P4, the traffic is redirected to a new next-hop AS, namely, the AS 4. R1 determines, using the Adj-RIBs-in table, the destination prefix P4, and the next-hop AS 4 in the routing entry, that an AS path obtained through redirection is the AS 2->the AS 4.

A redirection strategy 3 includes only the egress interface identifier, and does not specify a matched source prefix and destination prefix. In this case, it indicates that the redirection strategy matches all source prefixes and destination prefixes. If an egress interface identifier of a route in the routing entry is 80, traffic is redirected to a new next-hop AS, namely, the AS 4. R1 determines, using the Adj-RIBs-in table, the egress interface identifier 80, and the next-hop AS 4 in the routing entry, that an AS path obtained through redirection may include the AS 2->the AS 4, the AS 2->the AS 4->the AS 5, and the AS 2->the AS 4->the AS 5->the another AS.

If an AS that performs a redirection operation is not connected to the redirection next-hop AS over a BGP, the next-hop AS cannot be directly obtained only based on the redirection strategy and a BGP peer relationship, and additional configuration information needs to be added on the egress interface, to specify the next-hop AS directly connected to the egress interface. In addition, when the routing entry does not have a full routing table, for example, Adj-RIBs-in, the AS path obtained through redirection includes only the next-hop AS.

In some application scenarios, a plurality of redirection operations may occur. For example, in a redirection combination scenario occurring in the scenario shown in FIG. 1a, the traffic of the AS 1 is redirected, on the AS 2, to the new next-hop AS, namely, the AS 4, and a redirection strategy may also be configured on the AS 4 to redirect the traffic to another AS. In this case, an AS forwarding path corresponding to the traffic from the AS 1 is a path obtained after the two redirections are combined, namely, a path from the source AS to an AS that performs 1^{st} redirection, from the AS that performs 1^{st} redirection to AS that performs 2^{nd} redirection, and from the AS that performs 2^{nd} redirection to a destination AS. In this scenario, processes in which redirection operations are performed each time are similar. A complete forwarding path is from the source AS to the AS that performs 1^{st} redirection, and from an that performs (n-1)^{th} redirection to an AS that performs n^{th} redirection, until the destination AS. In this case, a redirection AS needs to notify an upstream AS of an AS path obtained through redirection, to determine validity of the complete AS forwarding path.

In a possible implementation, after obtaining the first AS path based on the routing entry and the redirection strategy, the first network device may send an advertisement packet to the source AS. The advertisement packet includes the first AS path, so that the source AS can perceive the AS path obtained through redirection. For a format of the advertisement packet, refer to the format shown in FIG. 4. In this embodiment, details are not described herein again.

Specifically, when sending the advertisement packet to the source AS, the first network device may perform advertisement in a hop-by-hop manner or directly based on an actual application scenario. For ease of understanding, the following provides descriptions with reference to application scenarios shown in accompanying drawings.
(1) Hop-by-hop advertisement of the AS path obtained through redirection
   As shown in FIG. 6a, an AS 1, an AS 2, and an AS 3 are included, where the AS 3 is an AS that performs a redirection operation, and the AS 1 is a source AS. The advertisement packet is reversely forwarded to the source AS, namely, the AS 1, along a BGP route propagation path. The following specific implementation steps are included.
   (1) A network device that performs the redirection operation in the AS 3, for example, an ASBR 1, may construct the advertisement packet.
   (2) If the ASBR 1 has a direct BGP peer relationship with the source AS, the ASBR 1 directly sends the advertisement packet to the source AS.
   (3) If the ASBR 1 has no direct BGP peer relationship with the source AS, the ASBR 1 obtains AS_path in a route to the source AS, and fills AS_path in the transport_AS_path field.
   (4) If the ASBR 1 has established a peer relationship with a network device in an AS on transport_AS_path, for example, an ASBR 2 in the AS 2, the ASBR 1 sends the advertisement packet to the ASBR 2. If the ASBR 1 has established no peer relationship with the network device in the AS on transport_AS_path, the ASBR 1 floods the advertisement packet to all other intra-domain ASBRs.
   (5) If another ASBR has a BGP peer relationship with an AS on transport_AS_path, the another ASBR sends the advertisement packet to the neighbor AS. If the another ASBR has no BGP peer relationship with the AS on transport_AS_path, the ASBR discards the advertisement packet.
   (6) For an AS that receives the advertisement packet, if transport_AS_path includes no AS number of the AS, the AS discards the advertisement packet.
   (7) For an AS that receives the advertisement packet, if the AS is a last AS on transport_AS_path, namely, the source AS, the AS floods the advertisement packet to all ASBRs in the source AS, and stops forwarding the advertisement packet.
      In this embodiment, a BGP protocol is deployed on all ASs on transport_AS_path, and all the ASs support forwarding a redirection AS path advertisement packet. In addition, the ASBR needs to check an interface connected to the AS on transport_AS_path, resulting in extra computational overheads.
(2) Direct advertisement of the AS path obtained through redirection
   As shown in FIG. 6a, an AS 1, an AS 2, and an AS 3 are included, where the AS 3 is an AS that performs a redirection operation, and the AS 1 is a source AS. An address of a network device in the source AS, for example, a server 1, is directly configured on a network device in the AS 3, for example, a server 2. The server 2 directly sends the advertisement packet to the server 1 in the source AS. The following specific implementation steps are included.
   (1) Pre-configure an IP address of the server 2 in the AS 3 on an ASBR 2 that performs the redirection operation in the AS.
   (2) The ASBR 2 constructs a redirection AS path advertisement packet, and sends the redirection AS path advertisement packet to the server 2 in the AS.
   (3) The server 2 collects, over a protocol like BGP or BMP, the redirection strategy from an ASBR and a valid AS path obtained through redirection and generated by the ASBR.
   (4) Configure, on the server 2 in the AS 3, information about the source AS, namely, an IP address and a source IP range of the server 1 in the AS 1.
   (5) The server 2 constructs the redirection AS path advertisement packet of the AS, and sends the generated valid AS path obtained through redirection to the server 1 in the AS 1.
   (6) The server 1 sends the AS path obtained through redirection to an intra-domain another ASBR, for example, an ASBR 1, or another server, to meet a requirement of engineering like network optimization or security protection.

In this embodiment, the transport_AS_path field in the advertisement packet is an optional field.

Based on the foregoing method embodiments, embodiments of this application provide a path validity verification apparatus and a redirection path obtaining apparatus. The following provides descriptions with reference to accompanying drawings.

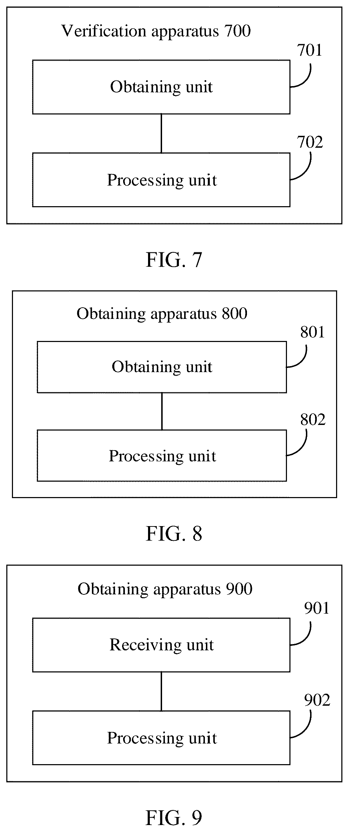

FIG. 7 is a diagram of a structure of a path validity verification apparatus according to an embodiment of this application. The apparatus is used in a first network device, or the apparatus may implement a function of R1 in the embodiment shown in FIG. 1a, or the apparatus may implement a function of R2 in the embodiment shown in FIG. 1b, or the apparatus may implement a function of the ASBR 1 in FIG. 6a, or the apparatus may implement a function of the ASBR 2 in FIG. 6b. The apparatus 700 may include an obtaining unit 701 and a processing unit 702. The obtaining unit 701 may perform S201 in the foregoing method embodiment. The processing unit 702 may perform S202 in the foregoing method embodiment.

Specifically, the obtaining unit 701 is configured to obtain a first autonomous system AS path obtained through redirection. The processing unit 702 is configured to verify validity of the first AS path according to a verification strategy, where the verification strategy is used to verify validity of an AS sequence included in the first AS path.

In a possible implementation, the obtaining unit 701 is specifically configured to receive an advertisement packet sent by a second network device on the first AS path, where the advertisement packet includes the first AS path.

In a possible implementation, the obtaining unit 701 is specifically configured to obtain the first AS path based on a routing entry and a redirection strategy, where the redirection strategy includes a parameter set, and the routing entry includes the first AS path and the parameter set.

In a possible implementation, the parameter set includes at least one of a destination prefix or next-hop information. The parameter set further includes a source prefix.

In a possible implementation, the apparatus further includes a sending unit (not shown in FIG. 7). The sending unit is used by the first network device to send an advertisement packet to a source AS, where the advertisement packet includes the first AS path.

In a possible implementation, the advertisement packet further includes a number of an AS that performs a redirection operation, an AS path through which the advertisement packet is transported, and the redirection strategy.

In a possible implementation, the processing unit 702 is specifically configured to: if a next-hop AS corresponding to the first network device on the first AS path is a customer AS of an AS to which the first network device belongs, and a destination prefix matched for redirection is not a prefix advertised by a peer AS or an operator AS corresponding to the AS to which the first network device belongs, determine that the first AS path is a valid path; or if the next-hop AS corresponding to the first network device on the first AS path is the peer AS of the AS to which the first network device belongs, and the destination prefix matched for redirection is not the prefix advertised by the peer AS or the operator AS corresponding to the AS to which the first network device belongs, determine that the first AS path is a valid path.

In a possible implementation, the processing unit 702 is specifically configured to: if a next-hop AS corresponding to the first network device on the first AS path is a neighbor AS corresponding to an AS to which the first network device belongs, determine that the first AS path is a valid path, where the neighbor AS is a next hop of the AS to which the first network device belongs in a direction from the source AS to the AS to which the first network device belongs.

In a possible implementation, the processing unit 702 is specifically configured to: if a next-hop AS corresponding to the first network device on the first AS path is a preset AS, determine that the first AS path is a valid path.

In this embodiment, for an implementation of each unit, refer to a specific implementation process of the first network device in the method embodiment shown in FIG. 2. Details are not described herein again.

FIG. 8 shows a redirection path obtaining apparatus according to an embodiment of this application. The apparatus is used in a first network device, or the apparatus may implement a function of R1 in the embodiment shown in FIG. 1a, or the apparatus may implement a function of R2 in the embodiment shown in FIG. 1b, or the apparatus may implement a function of the ASBR 1 in FIG. 6a, or the apparatus may implement a function of the ASBR 2 in FIG. 6b. The apparatus 800 may include an obtaining unit 801 and a processing unit 802. The obtaining unit 801 may perform S501 in the foregoing method embodiment. The processing unit 802 may perform S502 in the foregoing method embodiment.

Specifically, the obtaining unit 801 is configured to obtain a routing entry and a redirection strategy. The processing unit 802 is configured to obtain, based on the routing entry and the redirection strategy, a first AS path obtained through redirection, where the redirection strategy includes a parameter set, and the routing entry table includes the parameter set and the first AS path.

In a possible implementation, the parameter set includes at least one of a destination prefix or next-hop information.

In a possible implementation, the apparatus further includes a sending unit. The sending unit is configured to send an advertisement packet to a source AS, where the advertisement packet includes the first AS path.

In this embodiment, for an implementation of each unit, refer to a specific implementation process of the first network device in the method embodiment shown in FIG. 5. Details are not described herein again.

FIG. 9 shows a redirection path obtaining apparatus according to an embodiment of this application. The apparatus is used in a first network device, or the apparatus may implement a function of the ASBR 2 in FIG. 6a, or the apparatus may implement a function of the ASBR 1 in FIG. 6b. The apparatus 900 may include a receiving unit 901 and a processing unit 902. The receiving unit 901 may perform S301 in the foregoing method embodiment. The processing unit 902 may perform S302 in the foregoing method embodiment.

Specifically, the receiving unit 901 is configured to receive an advertisement packet sent by a second network device, where the advertisement packet includes a first AS path obtained through redirection. The processing unit 902 is configured to obtain the first AS path based on the advertisement packet.

In a possible implementation, the advertisement packet further includes a number of an AS that performs a redirection operation, an AS path through which the advertisement packet is transported, and a redirection strategy used for redirection.

In this embodiment, for an implementation of each unit, refer to a specific implementation process of the first network device in the method embodiment shown in FIG. 3. Details are not described herein again.

In embodiments of this application, division into the units is an example, is merely a logical function division, and may other division during implementation. Functional units in embodiments of this application may be integrated into one processing unit, or each of the units may exist alone physically, or two or more units are integrated into one unit. For example, in the foregoing embodiments, the processing unit and the sending unit may be a same unit, or may be different units. The integrated unit may be implemented in a form of hardware, or may be implemented in a form of a software functional unit.

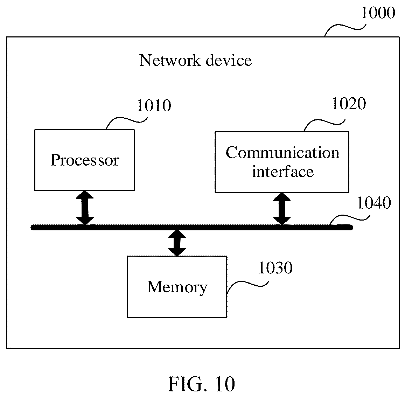

Hardware structures of the apparatus 700, the apparatus 800, and the apparatus 900 mentioned above may be a structure shown in FIG. 10. FIG. 10 is a diagram of a structure of a network device according to an embodiment of this application. The network device may be, for example, the first network device or the second network device in the foregoing method embodiments.

The network device 1000 includes a processor 1010, a communication interface 1020, and a memory 1030. There may be one or more processors 1010 in the communication device 1000. In FIG. 10, one processor is used as an example. In this embodiment of this application, the processor 1010, the communication interface 1020, and the memory 1030 may be connected to each other through a bus system or in another manner. In FIG. 10, an example in which the processor 1010, the communication interface 1020, and the memory 1030 are connected to each other through a bus system 1040 is used. The processor 1010 may be a CPU, an NP, or a combination of the CPU and the NP. The processor 1010 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The memory 1030 may include a volatile memory (volatile memory), for example, a random-access memory (random-access memory, RAM). The memory 1030 may also include a non-volatile memory (non-volatile memory), for example, a flash memory (flash memory), a hard disk drive (hard disk drive, HDD), or a solid-state drive (solid-state drive, SSD). The memory 1030 may alternatively include a combination of the foregoing types of memories. The memory 1030 may store, for example, the segment routing SR strategy mentioned above. Optionally, the memory 1030 stores an operating system and a program, an executable module or a data structure, a subset thereof, or an extended set thereof, where the program may include various operation instructions, to implement various operations. The operating system may include various system programs, to implement various basic services and process a hardware-based task. The processor 1010 may read the program in the memory 1030, to implement the method provided in embodiments of this application. The memory 1030 may be a storage device in the communication device 1000, or may be a storage apparatus independent of the communication device 1000. The bus system 1040 may be a peripheral component interconnect (peripheral component interconnect, PCI) bus, an extended industry standard architecture (extended industry standard architecture, EISA) bus, or the like. The bus system 1040 may be classified into an address bus, a data bus, a control bus, and the like. For ease of representation, only one bold line is used for representation in FIG. 10, but this does not mean that there is only one bus or only one type of bus.

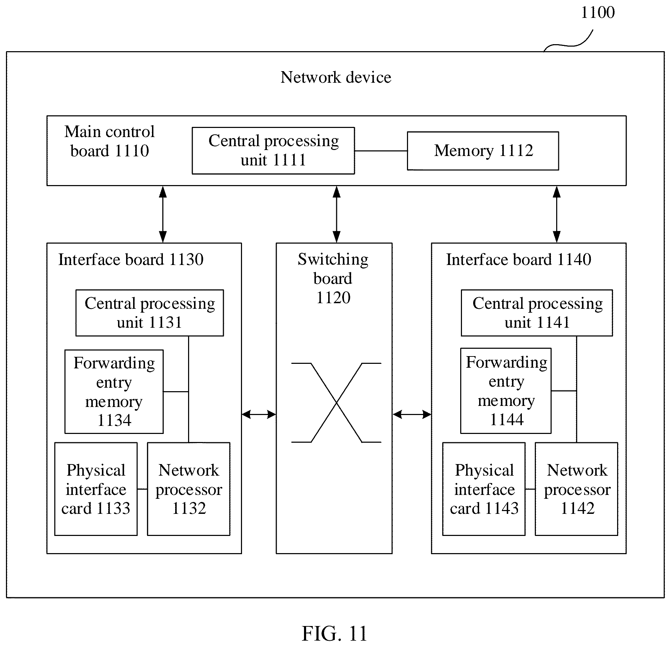

Hardware structures of the apparatus 700, the apparatus 800, and the apparatus 900 mentioned above may be a structure shown in FIG. 11. FIG. 11 is a diagram of a structure of a network device according to an embodiment of this application. The network device may be, for example, the first network device or the second network device in the foregoing method embodiments. The network device 1100 includes a main control board 1110 and an interface board 1130. The main control board 1110 is also referred to as a main processing unit (main processing unit, MPU) or a route processing card (route processor card). The main control board 1110 controls and manages components in the network device 1100, including functions of route computation, device management, device maintenance, and protocol processing. The main control board 1110 includes a central processing unit 1111 and a memory 1112. The interface board 1130 is also referred to as a line processing unit (line processing unit, LPU), a line card (line card), or a service board. The interface board 1130 is configured to: provide various service interfaces, and forward a data packet. The service interface includes but is not limited to an Ethernet interface, a POS (Packet over SONET/SDH) interface, and the like. The Ethernet interface is, for example, a flexible Ethernet service interface (Flexible Ethernet Clients, FlexE Clients). The interface board 1130 includes a central processing unit 1131, a network processor 1132, a forwarding entry memory 1134, and a physical interface card (physical interface card, PIC) 1133. The central processing unit 1131 on the interface board 1130 is configured to: control and manage the interface board 1130, and communicate with the central processing unit 1111 on the main control board 1110. The network processor 1132 is configured to implement packet forwarding processing. A form of the network processor 1132 may be a forwarding chip. Specifically, processing of an uplink packet includes packet ingress interface processing and forwarding table lookup. Processing of a downlink packet includes forwarding table lookup, and the like. The physical interface card 1133 is configured to implement a physical layer interconnection function. Original traffic enters the interface board 1130 from the physical interface card, and a processed packet is sent from the physical interface card 1133. The physical interface card 1133 includes at least one physical interface. The physical interface is also referred to as a physical port. The physical interface card 1133 is also referred to as a subcard, may be installed on the interface board 1130, and is responsible for converting an optical/electrical signal into a packet, performing validity check on the packet, and then forwarding the packet to the network processor 1132 for processing. In some embodiments, the central processing unit 1131 of the interface board 1103 may also perform a function of the network processor 1132, for example, implement software forwarding based on a general-purpose CPU. Therefore, the network processor 1132 is not required in the physical interface card 1133. Optionally, the network device 1100 includes a plurality of interface boards. For example, the network device 1100 further includes an interface board 1140. The interface board 1140 includes a central processing unit 1141, a network processor 1142, a forwarding entry memory 1144, and a physical interface card 1143. Optionally, the network device 1100 further includes a switching board 1120. The switching board 1120 may also be referred to as a switch fabric unit (switch fabric unit, SFU). When the network device has a plurality of interface boards 1130, the switching board 1120 is configured to complete data exchange between the interface boards. For example, the interface board 1130 and the interface board 1140 may communicate with each other through the switching board 1120. The main control board 1110 is coupled to the interface board 1130. For example, the main control board 1110, the interface board 1130 and the interface board 1140, and the switching board 1120 are connected to a system backboard through a system bus for interworking. In a possible implementation, an inter-process communication (inter-process communication, IPC) channel is established between the main control board 1110 and the interface board 1130. The main control board 1110 and the interface board 1130 communicate with each other through the IPC channel. Logically, the network device 1100 includes a control plane and a forwarding plane. The control plane includes the main control board 1110 and the central processing unit 1131. The forwarding plane includes various components that perform forwarding, for example, the forwarding entry memory 1134, the physical interface card 1133, and the network processor 1132. The control plane performs functions such as routing, generating a forwarding table, processing signaling and a protocol packet, and configuring and maintaining a device status. The control plane delivers the generated forwarding table to the forwarding plane. On the forwarding plane, the network processor 1132 looks up the forwarding table delivered by the control plane to forward a packet received by the physical interface card 1133. The forwarding table delivered by the control plane may be stored in the forwarding entry memory 1134. In some embodiments, the control plane and the forwarding plane may be completely separated, and are not on a same device. It should be understood that, in this embodiment of this application, an operation performed on the interface board 1140 are consistent with an operation performed on the interface board 1130. For brevity, details are not described again. It should be understood that the network device 1100 in this embodiment may correspond to the first network device in the foregoing method embodiments. The main control board 1110, the interface board 1130, and/or the interface board 1140 in the network device 1100 may implement various steps in the foregoing method embodiments. For brevity, details are not described herein again.

It should be understood that there may be one or more main control boards. When there are a plurality of main control boards, the main control boards may include an active main control board and a standby main control board. There may be one or more interface boards. A network device with a stronger data processing capability provides a larger quantity of interface boards. There may also be one or more physical interface cards on the interface board. There may be no switching board or one or more switching boards. When there are a plurality of switching boards, load sharing and redundancy backup may be implemented together. In a centralized forwarding architecture, the network device may require no switching board, and the interface board provides a function of processing service data of an entire system. In a distributed forwarding architecture, the network device may have at least one switching board, and data exchange between a plurality of interface boards is implemented via the switching board, to provide a large-capacity data exchange and processing capability. Therefore, a data access and processing capability of the network device in the distributed architecture is stronger than that of the device in the centralized architecture. Optionally, the network device may alternatively be in a form in which there is only one card, to be specific, there is no switching board, and functions of the interface board and the main control board are integrated on the card. In this case, a central processing unit on the interface board and a central processing unit on the main control board may be combined to form one central processing unit on the card, to perform functions obtained after the central processing units are combined. The device in this form (for example, a network device like a low-end switch or router) has a weak data exchange and processing capability. A specific architecture that is to be used depends on a specific networking deployment scenario.

In some possible embodiments, the network device may be implemented as a virtualized device. For example, the virtualized device may be a virtual machine (virtual machine, VM) on which a program for a packet sending function is run, and the virtual machine is deployed on a hardware device (for example, a physical server). The virtual machine is a complete software-simulated computer system that has complete hardware system functions and that runs in an entirely isolated environment. The virtual machine may be configured as the network device. For example, the network device may be implemented based on a general-purpose physical server in combination with a network functions virtualization (network functions virtualization, NFV) technology. The network device is a virtual host, a virtual router, or a virtual switch. By reading this application, persons skilled in the art may obtain, through virtualization on the general-purpose physical server in combination with the NFV technology, the network device having the foregoing functions. Details are not described herein.

It should be understood that the network devices in the foregoing product forms have any function of the first network device or the second network device in the foregoing method embodiments. Details are not described herein.

An embodiment of this application further provides a chip, including a processor and an interface circuit. The interface circuit is configured to: receive instructions, and transmit the instructions to the processor. The processor may be, for example, a specific implementation form of the apparatus 700 shown in FIG. 7, and may be configured to perform the foregoing method. The processor is coupled to a memory. The memory is configured to store a program or instructions. When the program or the instructions are executed by the processor, the chip system is enabled to implement the method in any one of the foregoing method embodiments.

Optionally, there may be one or more processors in the chip system. The processor may be implemented by hardware, or may be implemented by software. When being implemented by the hardware, the processor may be a logic circuit, an integrated circuit, or the like. When being implemented by the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be respectively disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller (microcontroller unit, MCU), a programmable controller (programmable logic device, PLD), or another integrated chip.

An embodiment of this application further provides a network device system, including a first network device and a second network device. The first network device performs a related method corresponding to the foregoing embodiment. The second network device performs a related method corresponding to the foregoing embodiment.

An embodiment of this application further provides a computer-readable storage medium, including instructions or a computer program. When the instructions or the computer program is run on a computer, the computer is enabled to perform the path validity verification method or the redirection path obtaining method provided in the foregoing embodiment.

An embodiment of this application further provides a computer program product including instructions or a computer program. When the computer program product runs on a computer, the computer is enabled to perform the path validity verification method or the redirection path obtaining method provided in the foregoing embodiment.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way are interchangeable in appropriate circumstances, so that embodiments described herein can be implemented in other orders than the order illustrated or described herein. In addition, the terms "include" and "have" and any other variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by persons skilled in the art that, for convenience and brevity of description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical service division, and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected based on an actual requirement, to achieve the objectives of the solutions in embodiments.

In addition, service units in embodiments of this application may be integrated into one processing unit, or each of the units may exist alone physically, or two or more units are integrated into one unit. The integrated unit may be implemented in a form of hardware, or may be implemented in a form of a software service unit.

When being implemented in the form of the software service unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The storage medium includes any medium that can store program code, for example, a USB flash drive, a removable hard disk, a read-only memory (ROM, Read-Only Memory), a random-access memory (RAM, Random-Access Memory), a magnetic disk, or an optical disc.

Persons skilled in the art should be aware that, in the foregoing one or more examples, the services described in this application may be implemented by hardware, software, firmware, or any combination thereof. When being implemented by the software, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another place. The storage medium may be any available medium that can be accessed by a general-purpose computer or a dedicated computer.

In the foregoing specific implementations, the objectives, technical solutions, and beneficial effect of this application are further described in detail. It should be understood that the foregoing descriptions are merely specific implementations of this application.

The foregoing embodiments are intended merely to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A path validity verification method, wherein the method comprises:
obtaining, by a first network device, a first autonomous system AS path obtained through redirection; and
verifying, by the first network device, validity of the first AS path according to a verification strategy, wherein the verification strategy is used to verify validity of an AS sequence comprised in the first AS path.

2. The method according to claim 1, wherein the obtaining, by the first network device, the first autonomous system AS path obtained through redirection comprises:
receiving, by the first network device, an advertisement packet sent by a second network device on the first AS path, wherein the advertisement packet comprises the first AS path.

3. The method according to claim 1, wherein the obtaining, by the first network device, the first autonomous system AS path obtained through redirection comprises:
obtaining, by the first network device, the first AS path based on a routing entry and a redirection strategy, wherein the redirection strategy comprises a parameter set, and the routing entry comprises the first AS path and the parameter set.

4. The method according to claim 3, wherein the parameter set comprises at least one of a destination prefix or next-hop information.

5. The method according to claim 4, wherein the parameter set further comprises a source prefix.

6. The method according to any one of claims 3 to 5, wherein the method further comprises:
sending, by the first network device, an advertisement packet to a source AS, wherein the advertisement packet comprises the first AS path.

7. The method according to claim 6, wherein the advertisement packet further comprises a number of an AS that performs a redirection operation, an AS path through which the advertisement packet is transported, and the redirection strategy.

8. The method according to any one of claims 1 to 7, wherein the verifying, by the first network device, the validity of the first AS path according to the verification strategy comprises:
if a next-hop AS corresponding to the first network device on the first AS path is a customer AS of an AS to which the first network device belongs, and a destination prefix matched for redirection is not a prefix advertised by a peer AS or an operator AS corresponding to the AS to which the first network device belongs, determining, by the first network device, that the first AS path is a valid path; or
if the next-hop AS corresponding to the first network device on the first AS path is the peer AS of the AS to which the first network device belongs, and the destination prefix matched for redirection is not the prefix advertised by the peer AS or the operator AS corresponding to the AS to which the first network device belongs, determining, by the first network device, that the first AS path is a valid path.

9. The method according to any one of claims 1 to 7, wherein the verifying, by the first network device, the validity of the first AS path according to the verification strategy comprises:
if a next-hop AS corresponding to the first network device on the first AS path is a neighbor AS corresponding to an AS to which the first network device belongs, determining, by the first network device, that the first AS path is a valid path, wherein the neighbor AS is a next hop of the AS to which the first network device belongs in a direction from the source AS to the AS to which the first network device belongs.

10. The method according to any one of claims 1 to 7, wherein the verifying, by the first network device, the validity of the first AS path according to the verification strategy comprises:
if a next-hop AS corresponding to the first network device on the first AS path is a preset AS, determining, by the first network device, that the first AS path is a valid path.

11. A redirection path obtaining method, wherein the method comprises:
obtaining, by a first network device, a routing entry and a redirection strategy; and
obtaining, by the first network device based on the routing entry and the redirection strategy, a first AS path obtained through redirection, wherein the redirection strategy comprises a parameter set, and the routing entry comprises the parameter set and the first AS path.

12. The method according to claim 11, wherein the parameter set comprises at least one of a destination prefix or next-hop information.

13. The method according to claim 11 or 12, wherein the method further comprises:
sending, by the first network device, an advertisement packet to a source AS, wherein the advertisement packet comprises the first AS path.

14. A redirection path obtaining method, wherein the method comprises:
receiving, by a first network device, an advertisement packet sent by a second network device, wherein the advertisement packet comprises a first AS path obtained through redirection; and
obtaining, by the first network device, the first AS path based on the advertisement packet.

15. The method according to claim 14, wherein the advertisement packet further comprises a number of an AS that performs a redirection operation, an AS path through which the advertisement packet is transported, and a redirection strategy used for redirection.

16. A path validity verification apparatus, wherein the apparatus is used in a first network device, and the apparatus comprises:
an obtaining unit, configured to obtain a first autonomous system AS path obtained through redirection; and
a processing unit, configured to verify validity of the first AS path according to a verification strategy, wherein the verification strategy is used to verify validity of an AS sequence comprised in the first AS path.

17. The apparatus according to claim 16, wherein the obtaining unit is specifically configured to receive an advertisement packet sent by a second network device on the first AS path, wherein the advertisement packet comprises the first AS path.

18. The apparatus according to claim 16, wherein the obtaining unit is specifically configured to obtain the first AS path based on a routing entry and a redirection strategy, wherein the redirection strategy comprises a parameter set, and the routing entry comprises the first AS path and the parameter set.

19. The apparatus according to claim 18, wherein the parameter set comprises at least one of a destination prefix or next-hop information.

20. The apparatus according to claim 19, wherein the parameter set further comprises a source prefix.

21. The apparatus according to any one of claims 18 to 20, wherein the apparatus further comprises:
a sending unit, used by the first network device to send an advertisement packet to a source AS, wherein the advertisement packet comprises the first AS path.

22. The apparatus according to claim 21, wherein the advertisement packet further comprises a number of an AS that performs a redirection operation, an AS path through which the advertisement packet is transported, and the redirection strategy.

23. The apparatus according to any one of claims 16 to 22, wherein the processing unit is specifically configured to: if a next-hop AS corresponding to the first network device on the first AS path is a customer AS of an AS to which the first network device belongs, and a destination prefix matched for redirection is not a prefix advertised by a peer AS or an operator AS corresponding to the AS to which the first network device belongs, determine that the first AS path is a valid path; or if the next-hop AS corresponding to the first network device on the first AS path is the peer AS of the AS to which the first network device belongs, and the destination prefix matched for redirection is not the prefix advertised by the peer AS or the operator AS corresponding to the AS to which the first network device belongs, determine that the first AS path is a valid path.

24. The apparatus according to any one of claims 16 to 22, wherein the processing unit is specifically configured to: if a next-hop AS corresponding to the first network device on the first AS path is a neighbor AS corresponding to an AS to which the first network device belongs, determine that the first AS path is a valid path, wherein the neighbor AS is a next hop of the AS to which the first network device belongs in a direction from the source AS to the AS to which the first network device belongs.

25. The apparatus according to any one of claims 16 to 22, wherein the processing unit is specifically configured to: if a next-hop AS corresponding to the first network device on the first AS path is a preset AS, determine that the first AS path is a valid path.

26. A redirection path obtaining apparatus, wherein the apparatus is used in a first network device, and the apparatus comprises:
an obtaining unit, configured to obtain a routing entry and a redirection strategy; and
a processing unit, configured to obtain, based on the routing entry and the redirection strategy, a first AS path obtained through redirection, wherein the redirection strategy comprises a parameter set, and the routing entry comprises the parameter set and the first AS path.

27. The apparatus according to claim 26, wherein the parameter set comprises at least one of a destination prefix or next-hop information.

28. The apparatus according to claim 26 or 27, wherein the apparatus further comprises:
a sending unit, configured to send an advertisement packet to a source AS, wherein the advertisement packet comprises the first AS path.

29. A redirection path obtaining apparatus, wherein the apparatus is used in a first network device, and the apparatus comprises:
a receiving unit, configured to receive an advertisement packet sent by a second network device, wherein the advertisement packet comprises a first AS path obtained through redirection; and
a processing unit, configured to obtain the first AS path based on the advertisement packet.

30. The apparatus according to claim 29, wherein the advertisement packet further comprises a number of an AS that performs a redirection operation, an AS path through which the advertisement packet is transported, and a redirection strategy used for redirection.

31. A network device, wherein the routing device comprises a processor, the processor is coupled to a memory, the memory stores at least one computer program instruction, and the at least one computer program instruction is loaded and executed by the processor, to enable the network device to implement the method according to any one of claims 1 to 10, or the method according to any one of claims 11 to 13, or the method according to claim 14 or 15.

32. A computer-readable storage medium, comprising instructions, wherein when the instructions are run on a computer, the computer is enabled to perform the method according to any one of claims 1 to 10, or the method according to any one of claims 11 to 13, or the method according to claim 14 or 15.
